# EUROPEAN PATENT APPLICATION

(11) **EP 4 306 777 A1**
(43) Date of publication of application: **17.01.2024**
(21) Application number: 23184148.7
(22) Date of filing: 07.07.2023
(51) Int. Cl.: F01N 3/00, F01N 3/027, F01N 3/20, F01N 3/28

(54) **AMMONIA DECOMPOSITION SYSTEM, INTERNAL COMBUSTION ENGINE SYSTEM, AND AMMONIA DECOMPOSITION METHOD**

(30) Priority: 11.07.2022 JP 2022110876
(71) Applicant: Yanmar Holdings Co., Ltd., Osaka-shi, Osaka (JP)
(72) Inventor: MITARAI, Kenta, Osaka, (JP); KAWABE, Ken, Osaka, (JP); SEKINE, Yasushi, Tokyo (JP); DOI, Sae, Tokyo (JP)
(74) Representative: Novagraaf International SA

(57) **Abstract**

[Problem] To provide an ammonia decomposition system, internal combustion engine system, and ammonia decomposition method in which the generation amount of hydrogen is easily adjusted.

[Solution] An ammonia decomposition system 10 includes a decomposition unit 1 and a controller 2. The decomposition unit 1 decomposes ammonia. The controller 2 controls the decomposition rate of ammonia in the decomposition unit 1.

## Description

### TECHNICAL FIELD

The present invention relates to an ammonia decomposition system, internal combustion engine system, and ammonia decomposition method that decompose ammonia.

### BACKGROUND ART

As a related art, an ammonia decomposition system (ammonia cracker device) is known which includes a catalyst that decomposes ammonia (an ammonia cracker catalyst), and decomposes ammonia to generate hydrogen (refer to, for example, Patent Document 1). The related art focuses on the point that combustion of ammonia is insufficient during low-load operation and high-load operation of an engine that uses ammonia as a fuel (an ammonia engine) due to a characteristic that the flammability of ammonia is low, and the hydrogen obtained by decomposing ammonia is used as a fuel oil additive.

In the related art, an ammonia oxidation device is provided between the engine and the ammonia decomposition system to enable increasing the temperature of an exhaust gas by use of the heat of oxidation due to the oxidation reaction of ammonia. Consequently, it becomes possible to maintain the temperature of the catalyst at or above an operating temperature thereof also during low-load operation where the temperature of the exhaust gas from the engine is low, and it becomes possible to stably operate the engine.

### PRIOR ART DOCUMENT

### PATENT DOCUMENT

Patent Document 1: JP-A-2010-121509

### SUMMARY OF INVENTION

### TECHNICAL PROBLEM

However, since the production amount of hydrogen is automatically determined according to, for example, the temperature of the (heated) exhaust gas in the ammonia decomposition system according to the related art, it may be difficult to appropriately adjust the combustion efficiency of the fuel in the engine.

An object of the present invention is to provide an ammonia decomposition system, internal combustion engine system, and ammonia decomposition method in which the generation amount of hydrogen is easily adjusted.

### SOLUTION TO PROBLEM

An ammonia decomposition system according to one aspect of the present invention includes: a decomposition unit; and a controller. The decomposition unit decomposes ammonia. The controller controls a decomposition rate of ammonia in the decomposition unit.

An internal combustion engine system according to one aspect of the present invention includes: the ammonia decomposition system; and an engine. The engine is driven by receiving supply of gas outputted from the ammonia decomposition system.

An ammonia decomposition method according to one aspect of the present invention includes: decomposing ammonia in a decomposition unit; and controlling a decomposition rate of ammonia in the decomposition unit.

### ADVANTAGEOUS EFFECTS OF INVENTION

The present invention can provide an ammonia decomposition system, internal combustion engine system, and ammonia decomposition method in which the generation amount of hydrogen is easily adjusted.

### BRIEF DESCRIPTION OF DRAWINGS

Fig. 1 is a schematic diagram illustrating a configuration of an internal combustion engine system according to a first embodiment;
Fig. 2 is a schematic diagram illustrating a configuration of an ammonia decomposition system according to the first embodiment;
Fig. 3 is a graph illustrating an example of actual values of the decomposition rate of ammonia in a case where the temperature of a catalyst is changed, in the ammonia decomposition system according to the first embodiment;
Fig. 4 is a graph illustrating an example of actual values of the decomposition rate of ammonia in a case where the value of current flowing through the catalyst is changed, in the ammonia decomposition system according to the first embodiment;
Fig. 5 is a graph illustrating an example of actual values of the decomposition rate of ammonia in a case where the value of current flowing through the catalyst is changed, in the ammonia decomposition system according to the first embodiment;
Fig. 6 is a graph illustrating an example of actual values of the decomposition rate of ammonia in a case where the flow rate of ammonia is changed, in the ammonia decomposition system according to the first embodiment;
Fig. 7 is a graph illustrating an example of actual values of the decomposition rate of ammonia in a case where the material of the catalyst is changed, in the ammonia decomposition system according to the first embodiment;
Fig. 8 is a graph illustrating an example of actual values of the decomposition rate of ammonia in a case where the flow rate of ammonia is changed, in the ammonia decomposition system according to the first embodiment;
Fig. 9 is a graph illustrating an example of actual values of the decomposition rate of ammonia in a case where the material of the catalyst is changed, in the ammonia decomposition system according to the first embodiment;
Fig. 10 is a graph illustrating an example of actual values of the decomposition rate of ammonia in a case where the material of the catalyst is changed, in the ammonia decomposition system according to the first embodiment;
Fig. 11 is an explanatory diagram schematically illustrating a state in which ammonia is decomposed in the catalyst, in the ammonia decomposition system according to the first embodiment; and
Fig. 12 is a schematic diagram illustrating a configuration of an internal combustion engine system according to a second embodiment.

### DESCRIPTION OF EMBODIMENTS

Embodiments of the present invention are described hereinafter with reference to the accompanying drawings. The following embodiments are implemented examples of the present invention, and are not intended to limit the technical scope of the present invention. Moreover, in the accompanying drawings, the illustration of, for example, a detailed shape of each unit is omitted as appropriate.

### (First Embodiment)

### [1] Entire Configuration of Internal Combustion Engine System

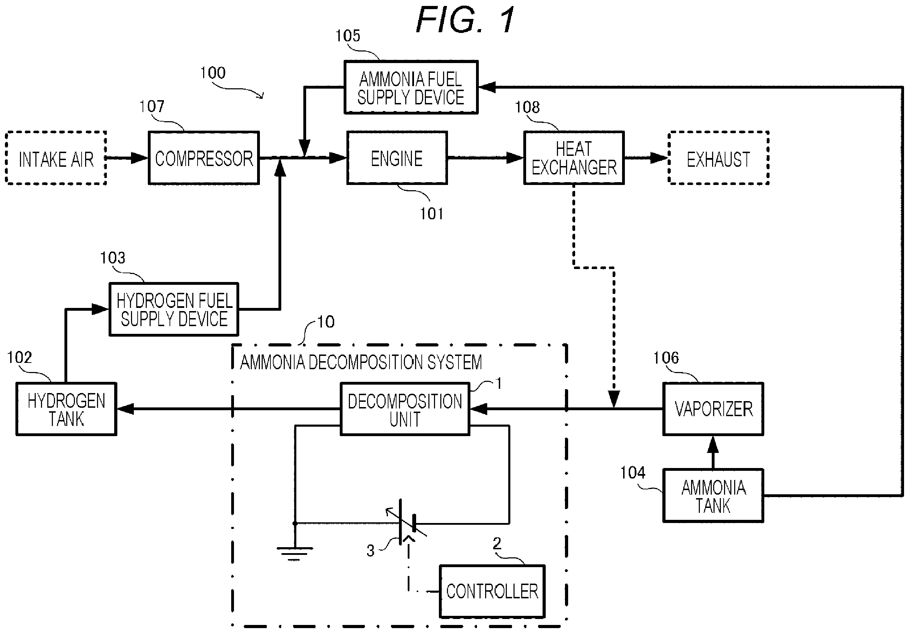

Firstly, the entire configuration of an internal combustion engine system 100 according to the embodiment is described with reference to Fig. 1. In Fig. 1, the configuration of each unit of the internal combustion engine system 100 is schematically illustrated, and the flow of gas (gas) or liquid is indicated by thick arrows, and the flow of heat is indicated by a dotted arrow.

As illustrated in Fig. 1, the internal combustion engine system 100 according to the embodiment includes an engine 101 which is the main component of the internal combustion engine system 100. The term "engine" referred to herein is a heat engine that combusts a fuel to generate mechanical energy (power), and includes an internal combustion engine being a prime mover that combusts a fuel inside the engine and converts thermal energy into mechanical energy by use of combustion gas as operational gas. In other words, the engine 101 generates power (mechanical energy) by use of the supplied fuel.

In the embodiment, the internal combustion engine system 100 used in a vessel is described as an example. In other words, the internal combustion engine system 100 is mounted in the hull of a vessel. The engine 101 of the internal combustion engine system 100 is used as a drive source for generating thrust for propelling the hull. Furthermore, in the embodiment, the engine 101 of the internal combustion engine system 100 can also be used as a drive source for driving a generator that produces electrical energy (electrical power) used in the hull. In other words, the engine 101 of the internal combustion engine system 100 is used as a drive source for generating thrust of the hull, or for driving a generator of the hull. The electrical energy produced by the generator may be stored in an electrical storage device.

The vessel is a moving body that navigates (sails) on the water such as the sea, a lake, or a river. In the embodiment, as an example, the vessel is a vessel that navigates a relatively long distance by refueling once, as in, for example, an ocean-going vessel. The hull of the vessel has a propeller. The propeller is coupled by a propeller shaft to the engine 101 of the internal combustion engine system 100. The vessel receives power generated by the engine 101 and rotates the propeller about the propeller shaft, thereby generating thrust for moving the hull forward or backward.

Moreover, in the embodiment, the vessel is configured in such a manner as to operate in response to an operation (including remote control) by a person (operator), and is particularly a manned type where a person who is an operator can board. Hence, the vessel has a control panel that accepts an operation by the operator, in the hull, and drives the engine 101 of the internal combustion engine system 100 in response to the operation on the control panel. Consequently, the vessel can drive the engine 101 in response to the operation by the operator, rotate the propeller, and move the hull forward or backward. Moreover, the hull further includes various inboard devices including the steering mechanism, a display device, a communication device, and a lighting facility.

The engine 101 according to the embodiment is an engine using at least hydrogen as a fuel or a fuel oil additive. In other words, in the internal combustion engine system 100, hydrogen stored in a hydrogen tank 102 is supplied to the engine 101 by a hydrogen fuel supply device 103 to drive the engine 101. In particular, in terms of the engine 101 in the embodiment, a mixed combustion engine where fuel gas obtained by mixing hydrogen (H₂) and ammonia (NH₃) is combusted is described as an example of the engine 101. Furthermore, the engine 101 is assumed to be a lean-burn (lean-burn) engine that burns a fuel at a ratio that is leaner (with an excess of air) than the stoichiometric air-fuel ratio. Hence, in the internal combustion engine system 100 according to the embodiment, ammonia stored in an ammonia tank 104 is supplied to the engine 101 by an ammonia fuel supply device 105. Consequently, hydrogen and ammonia are supplied to the engine 101 to drive the engine 101 by use of hydrogen and ammonia as a fuel.

The engine 101 is a type of ammonia engine using ammonia as a main fuel, and has an advantage to be capable of keeping carbon dioxide emissions lower than an engine using a fossil fuel (such as light oil or gasoline) as a main fuel. In addition, in the engine 101, both hydrogen and ammonia are used as a fuel (or a fuel oil additive); therefore, it is possible to compensate, with hydrogen, for the drawback of ammonia that is difficult to set on fire and burn. In other words, the use of the mixed gas of ammonia and hydrogen allows the engine 101 to, although using ammonia as a fuel, improve combustibility and facilitates the use of the engine 101 in a wide operating region (load region), as compared to a case where only ammonia is used as a fuel. Moreover, the combustion efficiency of the engine 101 is easily controlled appropriately as compared to a case where only hydrogen is used as a fuel; therefore, it is easy to reduce occurrence of abnormal combustion and to promote an increase in output.

In the internal combustion engine system 100 according to the embodiment, the hydrogen obtained by decomposing ammonia is supplied as a fuel (or a fuel oil additive) to the engine 101. Hence, an ammonia decomposition system 10 that decomposes ammonia is used. The ammonia decomposition system 10 decomposes ammonia to obtain hydrogen and nitrogen. In other words, when ammonia (NH₃) is supplied to the ammonia decomposition system 10, hydrogen (H₂) and nitrogen (N₂), and also residual ammonia (NH₃) that remains undecomposed are outputted from the ammonia decomposition system 10. In this manner, the internal combustion engine system 100 according to the embodiment includes the ammonia decomposition system 10 and the engine 101. The engine 101 is driven by receiving supply of a gas (hydrogen) outputted from the ammonia decomposition system 10.

Specifically, the internal combustion engine system 100 includes the ammonia decomposition system 10 and a vaporizer 106 in addition to the engine 101, the hydrogen tank 102, the hydrogen fuel supply device 103, the ammonia tank 104, and the ammonia fuel supply device 105. Liquid ammonia (liquefied ammonia) is stored in the ammonia tank 104. The vaporizer 106 vaporizes the liquefied ammonia in the ammonia tank 104 and supplies gaseous (gas) ammonia to the ammonia decomposition system 10. The ammonia decomposition system 10 outputs the gas (hydrogen) obtained by decomposing the ammonia to the hydrogen tank 102. Consequently, the hydrogen supplied as the fuel to the engine 101 is produced from the ammonia in the ammonia decomposition system 10 and stored (temporarily) in the hydrogen tank 102.

According to the internal combustion engine system 100 configured as described above, it is possible to efficiently and safely supply hydrogen as the fuel for the engine 101. In other words, for example, ammonia has a relatively high volumetric energy density compared to hydrogen, and is liquefied under mild conditions. Hence, in the internal combustion engine system 100, the ammonia stored in the ammonia tank 104 is decomposed in the ammonia decomposition system 10 on an as-needed basis to obtain hydrogen as the fuel; therefore, it is possible to promote an increase in the volumetric energy density of the stored substance as compared to a case where the hydrogen as the fuel is stored in a compressed gas or liquid state. Therefore, if the capacity of the tank (ammonia tank 104) is the same, more fuel can be stored, and if the same amount of fuel (hydrogen) is stored, a smaller tank (ammonia tank 104) is sufficient. In this manner, the fact that the hydrogen as the fuel can be supplied efficiently (in a smaller tank) and safely is particularly useful for a vessel that navigates a relatively long distance by refueling once, for example, an ocean-going vessel.

More specifically, the internal combustion engine system 100 includes a compressor 107 and a heat exchanger 108 in addition to the engine 101, the hydrogen tank 102, the hydrogen fuel supply device 103, the ammonia tank 104, and the ammonia fuel supply device 105, the ammonia decomposition system 10, and the vaporizer 106. The compressor 107 compresses air (atmosphere) taken in from the immediate environs of the internal combustion engine system 100, and supplies the compressed air, together with the fuel (hydrogen and ammonia), to the engine 101. The heat exchanger 108 exchanges heat between the exhaust gas exhausted from the engine 101 and a heating medium (coolant), and recovers thermal energy of the exhaust gas to cool the exhaust gas.

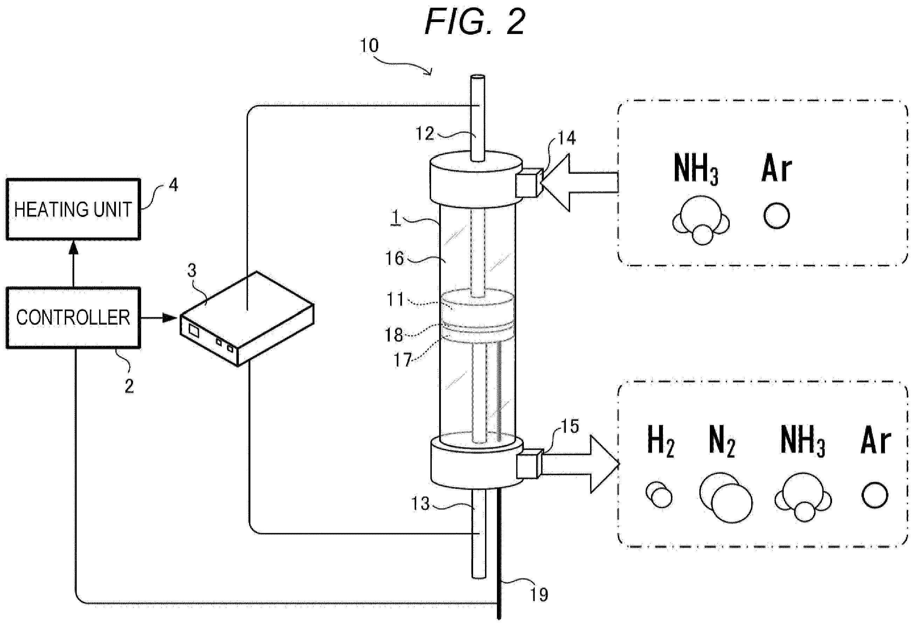

Furthermore, the thermal energy recovered in the heat exchanger 108 is sent to ammonia that is supplied to the ammonia decomposition system 10. In other words, the ammonia vaporized by the vaporizer 106 and supplied to the ammonia decomposition system 10 is heated by the exhaust heat of the engine 101 recovered by the heat exchanger 108. The heated ammonia is then supplied to a decomposition unit 1 of the ammonia decomposition system 10; therefore, the exhaust heat of the engine 101 recovered by the heat exchanger 108 indirectly heats the decomposition unit 1. In this manner, in the internal combustion engine system 100 according to the embodiment, the decomposition unit 1 is heated by use of the exhaust heat of the engine 101. In the embodiment, the decomposition unit 1 includes a catalyst 11 (refer to Fig. 2). The decomposition rate of ammonia in the decomposition unit 1 (the catalyst 11) is increased by heating the catalyst 11.

In this manner, the energy required to heat the decomposition unit 1 (the catalyst 11) can be kept low by making effective use of the exhaust heat of the engine 101. In addition, the exhaust heat of the engine 101 is used to heat the decomposition unit 1; therefore, the exhaust gas is also cooled. The internal combustion engine system 100 is not limited to the configuration in which the decomposition unit 1 is heated indirectly by use of the exhaust heat of the engine 101. For example, the decomposition unit 1 may be heated directly by sending the exhaust heat of the engine 101 directly to the decomposition unit 1. Moreover, the exhaust heat of the engine 101 referred to herein is not limited to the heat of the exhaust gas, and may be the heat of, for example, cooling water or lubricating oil. In other words, in addition to or instead of the exhaust gas, for example, the heat exchanger 108 may exchange heat between, for example, the cooling water or lubricating oil heated by the engine 101 and the heating medium to recover thermal energy from, for example, the cooling water or lubricating oil.

As described above, in the internal combustion engine system 100 according to the embodiment, the engine 101 uses the hydrogen obtained in the decomposition unit 1 (of the ammonia decomposition system 10) as at least a part of the fuel. Consequently, it possible to efficiently and safely supply the hydrogen as the fuel for the engine 101.

Furthermore, the engine 101 uses the hydrogen obtained in the decomposition unit 1 (of the ammonia decomposition system 10) and ammonia as the fuel. Consequently, carbon dioxide emissions can be kept low compared to an engine using a fossil fuel (such as light oil or gasoline) as a main fuel. In addition, the use of ammonia and hydrogen as a fuel allows the engine 101 to improve combustibility and facilitates the use of the engine 101 in a wide operating region (load region), as compared to a case where only ammonia is used as a fuel, and facilitates reducing occurrence of abnormal combustion and promoting an increase in output, as compared to a case where only hydrogen is used as a fuel.

Moreover, in the embodiment, the ammonia as the fuel for the engine 101 and the ammonia to be decomposed in the decomposition unit 1 (of the ammonia decomposition system 10) are housed in the common tank (the ammonia tank 104). In other words, the ammonia housed (stored) in one ammonia tank 104 is supplied as the fuel to the engine 101 by the ammonia fuel supply device 105 while being supplied to the decomposition unit 1 of the ammonia decomposition system 10 by the vaporizer 106 to be decomposed therein. Therefore, although hydrogen and ammonia are used as the fuel for the engine 101, the source of the two kinds of fuel can be stored in one tank (the ammonia tank 104), the tank can be made compact, and the tank refilling operation is also made easier.

### [2] Definition

The term "decomposition" referred to in the present invention is a kind of chemical reaction, and means chemical decomposition (Chemical decomposition) in which one chemical compound separates into elements or simpler compounds, and means a reverse process of chemical synthesis (Chemical synthesis). Decomposition usually requires energy supplied from the outside. There are various types of decomposition such as thermal decomposition, photolysis, electrolysis, and radiolysis according to the energy source thereof. In the embodiment, as an example, the ammonia decomposition system 10 decomposes ammonia (NH₃) into hydrogen (H₂) and nitrogen (N₂) by use of the catalyst 11. However, the ammonia decomposition system 10 is simply required to decompose at least a part of the supplied ammonia into hydrogen and nitrogen, and is not limited to decomposing the whole amount of the ammonia. Ammonia that is supplied to the ammonia decomposition system 10 but remains undecomposed is also referred to as the "residual ammonia".

The term "catalyst" referred to in the present invention is a substance which does not change itself (the catalyst) in a chemical reaction such as decomposition, but accelerates the chemical reaction. Strictly speaking, the "catalyst" causes some interaction with the reaction thereof, and the "catalyst" itself also changes at times, thereby changing the path of the reaction to accelerate the reaction. After the reaction, then the "catalyst" returns to its original state. As a result, the "catalyst" itself remains unchanged. In the embodiment, as an example, the decomposition unit 1 of the ammonia decomposition system 10 includes the catalyst 11 (ammonia decomposition catalyst) that decomposes ammonia, and decomposes ammonia by use of the catalyst 11.

The term "decomposition rate" referred to in the present invention means the rate of the amount of a chemical compound that is actually decomposed in relation to the whole amount of the chemical compound upon decomposition of the compound. In a case of the same amount of a chemical compound, the higher the decomposition rate, the larger the amount of the chemical compound to be decomposed, and the lower the decomposition rate, the smaller the amount of the chemical compound to be decomposed. In the embodiment, as an example, the decomposition rate related to the decomposition of ammonia in the ammonia decomposition system 10 is assumed to be expressed as a percentage from "0%" to "100%". For example, when the decomposition rate is "0%", the ammonia supplied to the ammonia decomposition system 10 is not decomposed at all, and the whole amount of the ammonia becomes the residual ammonia. Conversely, when the decomposition rate is "100%", the whole amount of the ammonia supplied to the ammonia decomposition system 10 is decomposed, and no residual ammonia is generated. When the decomposition rate is "50%", half of the ammonia supplied to the ammonia decomposition system 10 is decomposed, and the remaining half becomes the residual ammonia.

### [3] Configuration of Ammonia Decomposition System

Next, the configuration of the ammonia decomposition system 10 according to the embodiment is described with reference to Fig. 2. Fig. 2 is a schematic diagram schematically illustrating the configuration of the decomposition unit 1.

As the related art, a technology has been proposed in which the ammonia oxidation device is provided between the engine and the ammonia decomposition system to enable increasing the temperature of an exhaust gas by use of the heat of oxidation due to the oxidation reaction of ammonia. Consequently, it becomes possible to maintain the temperature of the catalyst at or above an operating temperature thereof also during low-load operation where the temperature of the exhaust gas from the engine is low, and it becomes possible to stably operate the engine.

However, since the production amount of hydrogen is automatically determined according to, for example, the temperature of the (heated) exhaust gas in the ammonia decomposition system according to the related art, it may be difficult to appropriately adjust the combustion efficiency of the fuel in the engine. Hence, the ammonia decomposition system 10 according to the embodiment employs a configuration described below for the purpose of facilitating adjustment of the generation amount of hydrogen.

In other words, the ammonia decomposition system 10 according to the embodiment includes the decomposition unit 1 and a controller 2. The decomposition unit 1 is a device that decomposes ammonia. The controller 2 controls the decomposition rate of ammonia in the decomposition unit 1. In other words, the ammonia decomposition system 10 decomposes ammonia that is supplied from the outside (the vaporizer 106) to the decomposition unit 1, in the decomposition unit 1. In the embodiment, as an example, the decomposition unit 1 decomposes ammonia into hydrogen and nitrogen, of which the hydrogen is outputted to the hydrogen tank 102 (refer to Fig. 1). In other words, the ammonia decomposition system 10 temporarily stores the gas (hydrogen) obtained by decomposing ammonia, in the hydrogen tank 102.

In the ammonia decomposition system 10 according to the embodiment, the decomposition rate of ammonia in the decomposition unit 1 is not fixed, and can be controlled (adjusted) by the controller 2. For example, the controller 2 changes the decomposition rate of ammonia (the ammonia decomposition rate) within a variable range from "0%" or greater to "100%" or less. When the controller 2 controls the decomposition rate at "0%", ammonia is not decomposed at all in the decomposition unit 1; therefore, the generation amount of hydrogen obtained by decomposing ammonia is the minimum (zero). Conversely, when the controller 2 controls the decomposition rate at "100%", the whole amount of ammonia is decomposed in decomposition unit 1; therefore, the generation amount of hydrogen obtained by decomposing ammonia is the maximum.

According to the configuration described above, in the ammonia decomposition system 10 according to the embodiment, since the decomposition rate of ammonia in the decomposition unit 1 is variable, the production amount of hydrogen obtained by decomposing ammonia can also be adjusted. Therefore, it is possible to provide the ammonia decomposition system 10 that can easily adjust the generation amount of hydrogen.

Moreover, in the ammonia decomposition system 10 according to the embodiment, the decomposition unit 1 includes the catalyst 11 that decomposes ammonia, as described above. Furthermore, the decomposition unit 1 includes electrodes 12 and 13 that apply an electric field to the catalyst 11. In short, in the embodiment, the decomposition unit 1 includes, for example, the pair of electrodes 12 and 13 that is provided in such a manner as to sandwich the catalyst 11, and the pair of electrodes 12 and 13 apply an electric field to the catalyst 11. Consequently, it possible to accelerate the decomposition of ammonia in the catalyst 11 particularly under an environment where the temperature of the catalyst 11 is low, as compared to a case where no electric field is applied to the catalyst 11.

Specifically, as illustrated in Fig. 2, the ammonia decomposition system 10 includes a power supply device 3 in addition to the decomposition unit 1 having the catalyst 11 and the electrodes 12 and 13, and the controller 2. The power supply device 3 is a device that is electrically connected to the pair of electrodes 12 and 13 in the decomposition unit 1, and applies a direct current voltage across the pair of electrodes 12 and 13. The power supply device 3 applies a direct current voltage across the pair of electrodes 12 and 13 to apply an electric field to the catalyst 11 from the pair of electrodes 12 and 13. The power supply device 3 generates, for example, a direct current voltage of approximately several hundred V, and applies the direct current voltage across the pair of electrodes 12 and 13.

In the embodiment, as an example, the power supply device 3 applies a direct current voltage across the pair of electrodes 12 and 13 with the electrode 12 as a negative electrode and the electrode 13 as a positive electrode. Consequently, the power supply device 3 applies a direct current voltage across the pair of electrodes 12 and 13 with the electrode 12 at a low potential and the electrode 13 at a high potential. Here, the power supply device 3 uses the electrode 13 on the positive side as a reference potential point (ground), and applies a negative voltage across the pair of electrodes 12 and 13. However, the present invention is not limited to this configuration, and it is simply required to apply an electric field to the catalyst 11. Therefore, for example, the power supply device 3 may apply a positive voltage across the pair of electrodes 12 and 13 by bringing the low-potential electrode 12 to ground and the high-potential electrode 13 to a positive potential.

More specifically, as illustrated in Fig. 2, the decomposition unit 1 includes an inlet 14, an outlet 15, a tubular body 16, a catalyst fixed bed 17, a mesh 18, and a temperature sensor 19 in addition to the catalyst 11 and the pair of electrodes 12 and 13.

The inlet 14 is an opening through which the gas (ammonia) to be decomposed in the decomposition unit 1 is introduced. The outlet 15 is an opening through which the gas obtained by decomposing ammonia in the decomposition unit 1 is discharged. The tubular body 16 is formed in, for example, a cylindrical shape and houses at least the catalyst 11. The inlet 14 is provided at one end of the tubular body 16 in the longitudinal direction, and the outlet 15 is provided at the other end of the tubular body 16 in the longitudinal direction. Consequently, the gas introduced from the inlet 14 can be discharged from the outlet 15 through the tubular body 16. The gas (ammonia) is then decomposed in the catalyst 11 housed in the tubular body 16 and therefore is decomposed when passing through the tubular body 16.

The catalyst fixed bed 17 and the mesh 18 are housed in the tubular body 16. The catalyst 11 is stacked on the catalyst fixed bed 17 via the mesh 18. The pair of electrodes 12 and 13 is rod-like electrodes, and have been inserted into the catalyst 11 from two ends of the tubular body 16 in the longitudinal direction, respectively. Furthermore, the temperature sensor 19 is a thermocouple as an example, has been inserted into the catalyst from the other end of the tubular body 16 in the longitudinal direction, and measures the temperature of a reaction field (a catalyst temperature) in real time. The measured value of the catalyst temperature at the temperature sensor 19 is outputted to the controller 2.

In the embodiment, an inert gas (argon as an example), together with ammonia, is introduced into the decomposition unit 1. Hence, as illustrated in Fig. 2, ammonia (NH₃) and argon (Ar) are introduced from the inlet 14. The ammonia is decomposed in the catalyst 11 of the decomposition unit 1. Hydrogen (H₂), nitrogen (N₂), the (residual) ammonia (NH₃), and the argon (Ar) are discharged from the outlet 15. However, the inert gas is not essential for the decomposition of ammonia.

As described above, since the decomposition unit 1 of the ammonia decomposition system 10 is configured in such a manner that the (pair of) electrodes 12 and 13 apply an electric field to the catalyst 11, the decomposition of ammonia in the catalyst 11 can be accelerated particularly also in an environment where the temperature of the catalyst 11 is low. In particular, in an environment where exhaust heat from the engine 101 of the internal combustion engine system 100 is not sufficient, it is necessary to additionally supply ammonia for an increase in temperature to increase the temperature of the catalyst 11, which may deteriorate the fuel efficiency of the internal combustion engine system 100. On the other hand, in the configuration where the decomposition of ammonia in the catalyst 11 is accelerated also at low temperatures by applying an electric field to the catalyst 11 as in the embodiment, it is not necessary to increase the temperature of the catalyst 11 that much in the first place, and it becomes easier to avoid deterioration of the fuel efficiency of the internal combustion engine system 100.

Moreover, the ammonia decomposition system 10 according to the embodiment further includes a heating unit 4 that heats the catalyst 11. The heating unit 4 brings the temperature of the catalyst 11 within a range from 50°C or higher to 600°C or lower. In other words, in order to increase the decomposition rate of ammonia in the catalyst 11, the heating unit 4 heats the catalyst 11 in such a manner that the temperature of the catalyst 11 falls within the range from 50°C or higher to 600°C or lower. The heating unit 4 may heat the catalyst 11 indirectly by heating the ammonia that is vaporized by the vaporizer 106 and supplied to the ammonia decomposition system 10, or may heat the catalyst 11 directly by use of, for example, a heater. In addition, in the embodiment, an electric field is applied to the catalyst 11 as described above; therefore, the heating unit 4 for its part does not need to heat the catalyst 11 to as high a temperature as, for example, 300°C or higher and can achieve decomposition of ammonia in the catalyst 11 sufficiently.

However, the lower temperature limit of the catalyst 11 that is heated by the heating unit 4 is not limited to 50°C, and may be, for example, lower than 50°C, or may be, for example, 100°C, 150°C, 200°C, 250°C, or 300°C. Similarly, the upper temperature limit of the catalyst 11 that is heated by the heating unit 4 is not limited to 600°C, and may be, for example, higher than 600°C, or may be, for example, 350°C, 400°C, 450°C, 500°C, or 550°C. As an example, it is more preferable that the heating unit 4 heat the catalyst 11 in such a manner that the temperature of the catalyst 11 falls within a range from 100°C or higher to 400°C or lower.

Moreover, in the embodiment, the decomposition unit 1 is heated by use of the exhaust heat of the engine 101 as described above. Therefore, the heating unit 4 may heat the catalyst 11 by use of at least the exhaust heat of the engine 101. In this manner, the energy required to heat the catalyst 11 can be kept low in the heating unit 4 by making effective use of the exhaust heat of the engine 101. In particular, when the catalyst 11 is used at a low temperature of 300°C or lower, the catalyst 11 can be sufficiently heated by the exhaust heat alone of the engine 101. It is not necessary to separately provide a heating device, and it is easy to downsize and simplify the ammonia decomposition system 10.

Incidentally, in the ammonia decomposition system 10 according to the embodiment, the controller 2 can control (adjust) the decomposition rate of ammonia (the ammonia decomposition rate) in the decomposition unit 1 as described above. The controller 2 changes the decomposition rate by changing at least one of the temperature of the catalyst 11, the value of current flowing through the catalyst 11, or the flow rate of ammonia passing through the catalyst 11. In other words, the ammonia decomposition rate is changed by changing at least one of the three parameters: the temperature of the catalyst 11, the value of current flowing through the catalyst 11, or the flow rate of ammonia passing through the catalyst 11. As an example in the embodiment, the controller 2 is configured in such a manner as to be capable of controlling all of the temperature of the catalyst 11, the value of current flowing through the catalyst 11, and the flow rate of ammonia passing through the catalyst 11.

For example, the controller 2 changes the decomposition rate (of ammonia) by at least the current value in such a manner that as the value of current flowing through the catalyst 11 increases, the decomposition rate (of ammonia) increases. Specifically, the controller 2 is configured in such a manner as to be capable of controlling the power supply device 3, and controls the magnitude (current value) of the current supplied from the power supply device 3 to the decomposition unit 1 (across the pair of electrodes 12 and 13) to control the magnitude (current value) of the current flowing through the catalyst 11. In other words, in the power supply device 3, the output current is not constant but variable, and the current value is controlled by the controller 2. The controller 2 may change the value of current flowing through the catalyst 11 continuously or in stages (discontinuously).

Basically, as the output current of the power supply device 3 increases, the value of current flowing through the catalyst 11 increases, and the ammonia decomposition rate increases. Therefore, the generation amount of hydrogen that is obtained by decomposing ammonia increases. Conversely, as the output current of the power supply device 3 decreases, the value of current flowing through the catalyst 11 decreases, and the ammonia decomposition rate decreases. Therefore, the generation amount of hydrogen that is obtained by decomposing ammonia decreases. Consequently, the ammonia decomposition rate can be controlled (adjusted) with a relatively simple configuration. In addition, the responsiveness of the ammonia decomposition rate to a change in current value is relatively high. Therefore, the controller 2 can control the ammonia decomposition rate easily in real time.

Moreover, the controller 2 changes the decomposition rate (of ammonia) according to at least the temperature of the catalyst 11 in such a manner that as the temperature of the catalyst 11 increases (becomes hotter), the decomposition rate (of ammonia) increases. Specifically, the controller 2 is configured in such a manner as to be capable of controlling the heating unit 4, and controls the temperature of the catalyst 11 by controlling the magnitude of the thermal energy that is added from the heating unit 4 to the catalyst 11. In other words, the output of the heating unit 4 is not constant but variable, and the output (thermal energy) is controlled by controller 2. The controller 2 may change the temperature of the catalyst 11 continuously or in stages (discontinuously).

Basically, as the temperature of the catalyst 11 increases, the ammonia decomposition rate increases; therefore, the generation amount of hydrogen that is obtained by decomposing ammonia increases. Conversely, when the temperature of the catalyst 11 decreases, the ammonia decomposition rate decreases; therefore, the generation amount of hydrogen that is obtained by decomposing ammonia decreases. Consequently, the ammonia decomposition rate can be controlled (adjusted) with a relatively simple configuration. In addition, the responsiveness of the ammonia decomposition rate to a change in the temperature of the catalyst 11 is relatively high. Therefore, the controller 2 can control the ammonia decomposition rate easily in real time.

Moreover, the controller 2 changes the decomposition rate (of ammonia) according to at least the flow rate of ammonia passing through the catalyst 11 in such a manner that as the flow rate (flow velocity) of ammonia passing through the catalyst 11 decreases, the decomposition rate (of ammonia) increases. Specifically, the controller 2 is configured in such a manner as to be capable of controlling the flow rate of ammonia supplied to the decomposition unit 1, and controls the flow rate (flow velocity) of ammonia passing through the catalyst 11 by controlling the flow rate of ammonia supplied to the decomposition unit 1. In other words, the flow rate (flow velocity) of ammonia passing through the catalyst 11 is not constant but variable, and the value (flow rate) is controlled by the controller 2. The controller 2 may change the flow rate of ammonia passing through the catalyst 11 continuously or in stages (discontinuously).

Basically, as the flow rate of ammonia passing through the catalyst 11 decreases, the ammonia decomposition rate increases; therefore, the concentration of hydrogen obtained by decomposing ammonia increases. Conversely, as the flow rate of ammonia passing through the catalyst 11 increases, the ammonia decomposition rate decreases; therefore, the concentration of hydrogen obtained by decomposing ammonia decreases. Consequently, the ammonia decomposition rate can be controlled (adjusted) with a relatively simple configuration. In addition, the responsiveness of the ammonia decomposition rate to a change in the flow rate of ammonia passing through the catalyst 11 is relatively high. Therefore, the controller 2 can control the ammonia decomposition rate easily in real time.

The catalyst 11 includes an active metal and an oxide. The active metal is any of ruthenium (Ru), nickel (Ni), iron (Fe), or cobalt (Co), and the oxide includes any of cerium (Ce), zirconium (Zr), Ba (barium), or Sr (strontium) as a main component. In other words, the catalyst 11 has the active metal such as ruthenium and a catalyst support including the oxide such as cerium. In such a catalyst 11, the controller 2 can change the ammonia decomposition rate by changing, for example, at least one of the temperature of the catalyst 11, the value of current flowing through the catalyst 11, or the flow rate of ammonia passing through the catalyst 11.

More specifically, in the embodiment, the oxide as the catalyst support is any of CeO₂, CeₓZr(₁₋ₓ)O₂, BaZrO₃, or SrₓBa₍₁₋ₓ₎ZrO₃. "x" is an arbitrary value in a range from "0" or greater to "1" or less (that is, "0 ≤ x ≤ 1") and, for example, in a case of CeₓZr₍₁₋ₓ₎O₂, it includes Ce_{0.5}Zr_{0.5}O₂ as an example.

According to the ammonia decomposition system 10 configured as described above, an ammonia decomposition method including decomposing ammonia in the decomposition unit 1 and controlling the decomposition rate of ammonia in the decomposition unit 1 is implemented. Such an ammonia decomposition method may be implemented without using the ammonia decomposition system 10.

### [4] Actual values

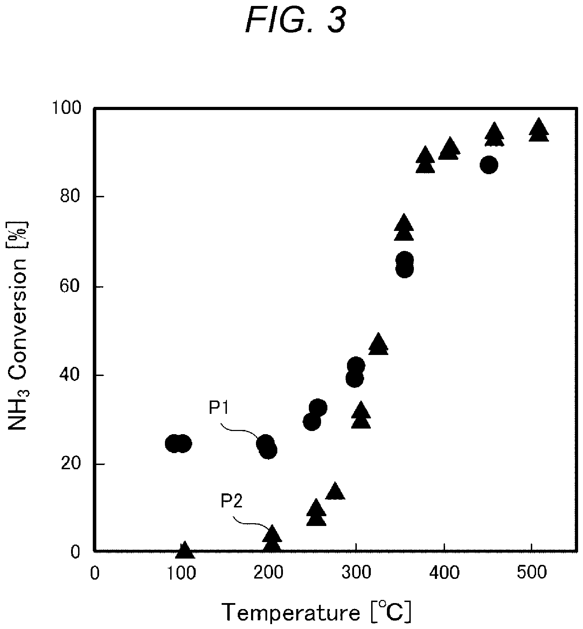

The actual values of the decomposition rate of ammonia obtained when, for example, the temperature of the catalyst 11, the value of current flowing through the catalyst 11, or the flow rate of ammonia passing through the catalyst 11 is changed in the ammonia decomposition system 10 according to the embodiment are described below with reference to Figs. 3 to 10. Figs. 3 to 10 are graphs illustrating examples of actual values, in which various parameters such as the temperature of the catalyst 11 are taken on the horizontal axes and the decomposition rate of ammonia (ammonia decomposition rate) is taken on the vertical axes. Furthermore, since the decomposition rate of ammonia varies also according to the amount of the catalyst 11 and the material (component) of the catalyst 11, the actual values of the decomposition rate of ammonia in a case where, for example, the material of the catalyst 11 is changed are also described below.

Fig. 3 is a graph illustrating the actual values of the decomposition rate of ammonia in a case where the temperature of the catalyst 11 (the horizontal axis) is changed. Test conditions other than the temperature of the catalyst 11 in Fig. 3 are as follows: the value of current flowing through the catalyst 11 (in a case of "with electric field") is "6 mA", the material of the catalyst 11 is "5 wt% Ru/CeO₂", the amount of the catalyst 11 is "100 mg", the flow rate of ammonia is "50 mL/min", and the reaction pressure is "atmospheric pressure". In Fig. 3, plots P1 of filled circles indicate data of "with electric field" where an electric field is applied to the catalyst 11, and plots P2 of filled triangles indicate data of "without electric field" where no electric field is applied to the catalyst 11.

As is clear from Fig. 3, there is a tendency that the ammonia decomposition rate increases as the temperature of the catalyst 11 increases. Furthermore, when the temperature of the catalyst 11 is in a range of "300°C" or lower, the effect of accelerating the decomposition of ammonia and increasing the ammonia decomposition rate is more remarkable in the case of "with electric field" than in the case of "without electric field". For example, when the temperature of the catalyst 11 is as low as "100°C", the ammonia decomposition rate is approximately "0%" in the case of "without electric field", whereas the ammonia decomposition rate exceeds "20%" in the case of "with electric field".

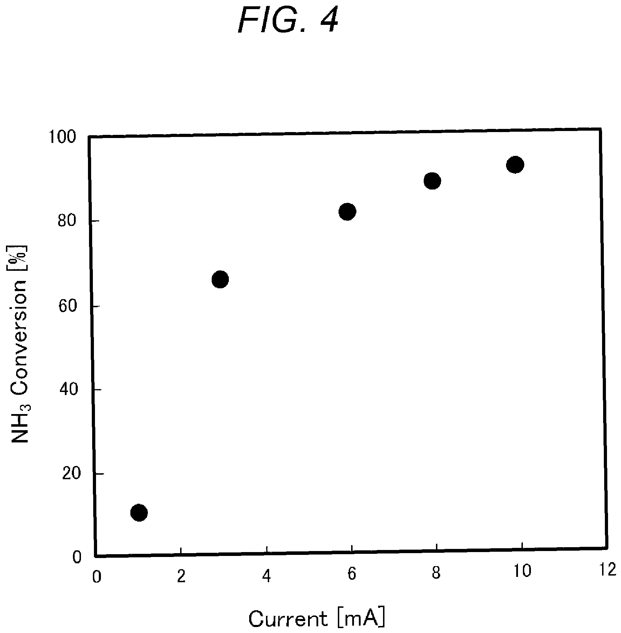

Fig. 4 is a graph illustrating the actual values of the decomposition rate of ammonia in a case where the value of current flowing through the catalyst 11 (the horizontal axis) is changed. Test conditions other than the current value in Fig. 4 are as follows: the temperature of the catalyst 11 is "150°C", the material of the catalyst 11 is "5 wt% Ru/CeO₂", the amount of the catalyst 11 is "300 mg", the flow rate of ammonia is "10 mL/min", and the reaction pressure is "atmospheric pressure".

As is clear from Fig. 4, there is a tendency that the ammonia decomposition rate increases as the current flowing through the catalyst 11 increases. For example, when the current value is around "10 mA", the ammonia decomposition rate increases to around " 100%" even though the temperature of the catalyst 11 is at a low temperature of "150°C".

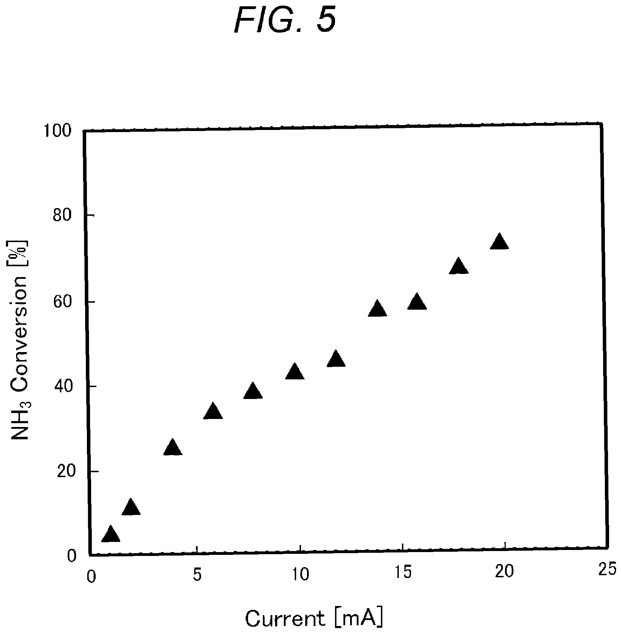

Fig. 5 is a graph illustrating the actual values of the decomposition rate of ammonia in a case where the value of current flowing through the catalyst 11 (the horizontal axis) is changed under the circumstances where various conditions such as the amount of the catalyst 11 and the flow rate of ammonia are different from those in Fig. 4. Test conditions other than the current value in Fig. 5 are as follows: the temperature of the catalyst 11 is " 125°C", the material of the catalyst 11 is "5 wt% Ru/CeO₂", the amount of the catalyst 11 is "100 mg", the flow rate of ammonia is "50 mL/min", and the reaction pressure is "atmospheric pressure". In other words, the conditions of the amount of the catalyst 11 and the flow rate of ammonia are set in such a manner that the actual values of the ammonia decomposition rate of Fig. 5 are lower than those of Fig. 4.

As is clear from Fig. 5, even when various conditions such as the amount of the catalyst 11 and the flow rate of ammonia change, the tendency that the ammonia decomposition rate increases as the current flowing through the catalyst 11 increases is similar. To put it another way, for example, even when the amount of the catalyst 11 is reduced, it is also possible to achieve an ammonia decomposition rate equivalent to one before the amount of the catalyst 11 is reduced, by increasing the electric field (electric power) applied from the power supply device 3 to the catalyst 11 and increasing the value of the current flowing through the catalyst 11.

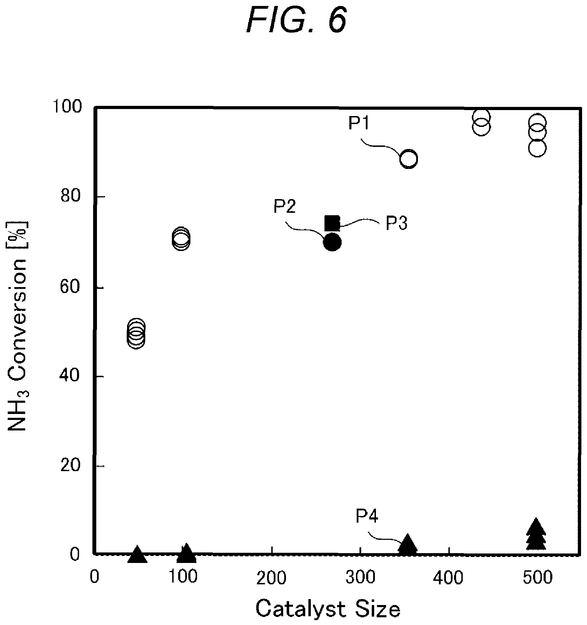

Fig. 6 is a graph illustrating the actual values of the decomposition rate of ammonia in a case where the flow rate of ammonia is changed. In Fig. 6, the "catalyst size" obtained by dividing the amount of the catalyst 11 by the flow velocity of ammonia is represented on the horizontal axis. In other words, the catalyst size increases as the flow rate of ammonia decreases. Test conditions of Fig. 6 are as follows: the value of current flowing through the catalyst 11 (in the case of "with electric field") is "6 mA", the material of the catalyst 11 is "5 wt% Ru/CeO₂", the amount of the catalyst 11 is "300 mg", and the reaction pressure is "atmospheric pressure". In this case, the catalyst size in a case where the flow rate of ammonia is changed in a range from "5 mL/min" to "50 mL/min" is represented on the horizontal axis. In Fig. 6, plots P1 of open circles indicate data in a case of "with electric field" where an electric field is applied to the catalyst 11 and a temperature of the catalyst 11 between "130°C " and "140°C". Plots P2 of filled circles indicate data in a case of "with electric field" and a temperature of the catalyst 11 of "45°C". Plots P3 of filled squares indicate data in a case of "with electric field" and a temperature of the catalyst 11 of "70°C". Plots P4 of filled triangles indicate data in a case of "without electric field" where no electric field is applied to the catalyst 11.

As is clear from Fig. 6, there is a tendency that the ammonia decomposition rate increases as the flow rate (flow velocity) of ammonia passing through the catalyst 11 decreases, that is, as the catalyst size increases. In addition, although the temperature of the catalyst 11 is at a low temperature of " 150°C" or lower, or "100°C" or lower, decomposition of ammonia is sufficiently accelerated under the condition of "with electric field". Particularly when the temperature of the catalyst 11 is between "130°C" and "140°C", the ammonia decomposition rate increases to around "100%". Furthermore, the ammonia decomposition rate reaches approximately "75%" even when the temperature of the catalyst 11 is "45°C". The ammonia decomposition rate reaches approximately "80%" even when the temperature of the catalyst 11 is "70°C". On the other hand, in the case of "without electric field", decomposition of ammonia is not substantially accelerated even when the flow rate of ammonia changes.

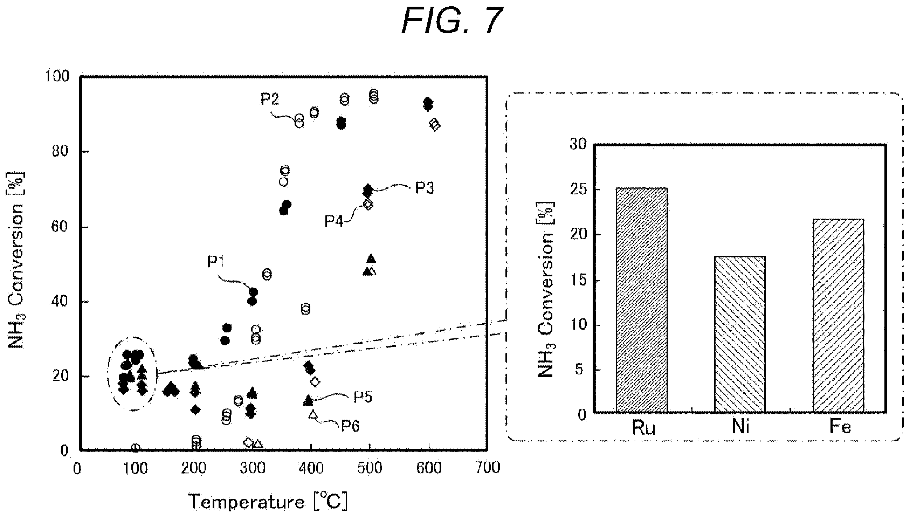

Fig. 7 is a graph illustrating the actual values of the decomposition rate of ammonia in a case where the material (component) of the catalyst 11 is changed. In Fig. 7, the temperature of the catalyst 11 is represented on the horizontal axis. Test conditions of Fig. 7 are as follows: the value of current flowing through the catalyst 11 (in the case of "with electric field") is "6 mA", the amount of the catalyst 11 is "100 mg", the flow rate of ammonia is "50 mL/min", and the reaction pressure is "atmospheric pressure". In this case, the actual values of the material of the catalyst 11 when the material is "5 wt% Ru/CeO₂", "3 wt% Ni/CeO₂", and "3 wt% Fe/CeO₂" are illustrated in Fig. 7. Moreover, in Fig. 7, the data on the catalyst 11 at a temperature of "100°C" is extracted, and a result obtained by arranging the data in bar graph form for each of the active metals (ruthenium (Ru), nickel (Ni), and iron (Fe)) of the catalyst 11 is illustrated in a balloon.

In Fig. 7, plots P1 of filled circles indicate data in a case of "with electric field" where an electric field is applied to the catalyst 11 and employing the catalyst 11 (5 wt% Ru/CeO₂) including ruthenium (Ru) as the active metal. Plots P2 of open circles indicate data in a case of "without electric field" where no electric field is applied to the catalyst 11 and employing the catalyst 11 including ruthenium as the active metal. Moreover, plots P3 of filled rhombuses indicate data in a case of "with electric field" and employing the catalyst 11 (3 wt% Ni/CeO₂) including nickel (Ni) as the active metal. Plots P4 of open rhombuses indicate data in a case of "without electric field" and employing the catalyst 11 including nickel as the active metal. Furthermore, plots P5 of filled triangles indicate data in a case of "with electric field" and employing the catalyst 11 (3 wt% Ni/CeO₂) including iron (Fe) as the active metal. Plots P6 of open triangles indicate data in a case of "without electric field" and employing the catalyst 11 including iron as the active metal.

As is clear from Fig. 7, when the temperature of the catalyst 11 is as high as around "500°C", ruthenium has the highest ammonia decomposition rate, nickel has the second highest ammonia decomposition rate, and iron has the lowest ammonia decomposition rate. However, even though the temperature of the catalyst 11 is at a low temperature of around " 100°C" under the condition of "with electric field", not only ruthenium but also nickel and iron achieve an ammonia decomposition rate around "20%". It can be seen from the above point that the sensitivity of acceleration of ammonia decomposition to temperature varies according to the material of the catalyst 11.

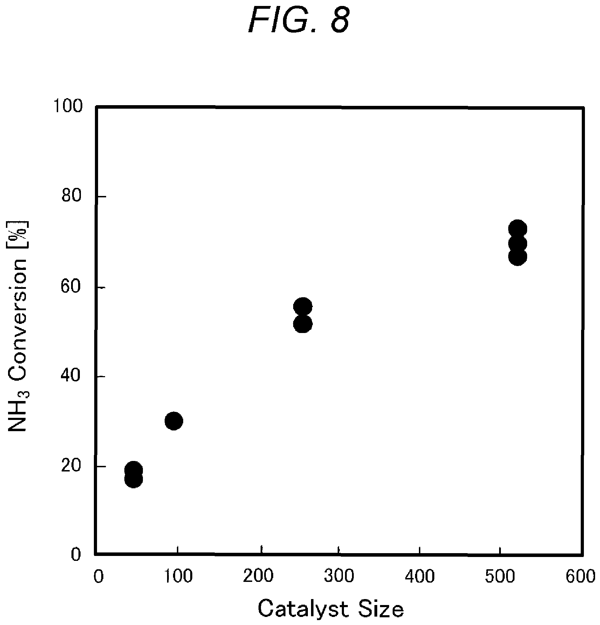

Fig. 8 is a graph illustrating the actual values of the decomposition rate of ammonia in a case where the flow rate of ammonia is changed when the material of the catalyst 11 is "3 wt% Ni/CeO₂". In Fig. 8, the "catalyst size" obtained by dividing the amount of the catalyst 11 by the flow velocity of ammonia is represented on the horizontal axis. Test conditions of Fig. 8 are as follows: the temperature of the catalyst 11 is "100°C", the value of current flowing through the catalyst 11 is "6 mA", the amount of the catalyst 11 is "300 mg", and the reaction pressure is "atmospheric pressure". In this case, the catalyst size in a case where the flow rate of ammonia is changed in a range from "5 mL/min" to "50 mL/min" is represented on the horizontal axis.

As is clear from Fig. 8, also when nickel, which is more easily employed than ruthenium, is used as the active metal, there is a tendency that the ammonia decomposition rate increases as the flow rate (flow velocity) of ammonia passing through the catalyst 11 decreases, that is, as the catalyst size increases. In addition, although the temperature of the catalyst 11 is at a low temperature of "100°C", the decomposition of ammonia is sufficiently accelerated under the condition of "with electric field", and the ammonia decomposition rate increases to around "80%". In this manner, also when nickel is used as the active metal, the ammonia decomposition rate can be controlled by changing the flow rate (flow velocity) of ammonia passing through the catalyst 11.

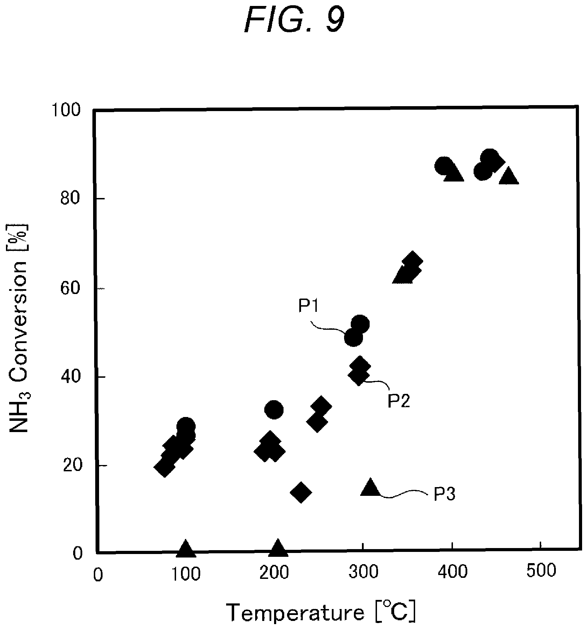

Fig. 9 is a graph illustrating the actual values of the decomposition rate of ammonia in a case where the material (component) of the catalyst 11 is changed. In Fig. 9, the temperature of the catalyst 11 is represented on the horizontal axis. Test conditions of Fig. 9 are as follows: the value of current flowing through the catalyst 11 (in the case of "with electric field") is "6 mA", the amount of the catalyst 11 is "100 mg", the flow rate of ammonia is "50 mL/min", and the reaction pressure is "atmospheric pressure". In this case, the actual values of the material of the catalyst 11 when the material is "5 wt% Ru/SrₓBa₍₁₋ₓ₎ZrO₃ (x=0.125)" and "5 wt% Ru/CeO₂" are illustrated in Fig. 9. In Fig. 9, plots P1 of filled circles indicate data in a case of "with electric field" where an electric field is applied to the catalyst 11 and employing the catalyst 11 including "SrₓBa₍₁₋ₓ₎ZrO₃ (x=0.125)" as the oxide. Plots P2 of filled rhombuses indicate data in a case of "with electric field" and employing the catalyst 11 including "CeO₂" as the oxide. Plots P3 of filled triangles in Fig. 9 indicate data in a case of "without electric field" where no electric field is applied to the catalyst 11.

As is clear from Fig. 9, even if only the oxide is changed without changing the active metal of the catalyst 11, decomposition of ammonia is sufficiently accelerated under the condition of "with electric field" when the temperature of the catalyst 11 is as low as "100°C".

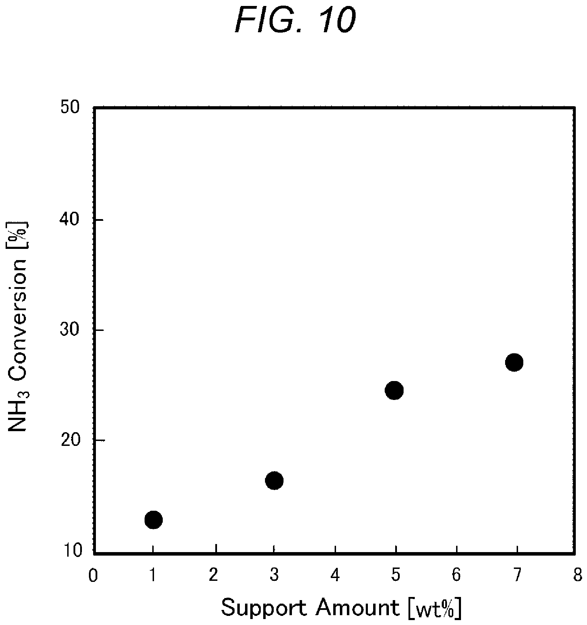

Fig. 10 is a graph illustrating the actual values of the decomposition rate of ammonia in a case where the material (component) of the catalyst 11 is changed. In Fig. 10, the ratio of ruthenium (Ru) as the active metal contained in the catalyst 11, that is, the support amount (wt%) of the active metal is represented on the horizontal axis. Test conditions of Fig. 10 are as follows: the temperature of the catalyst 11 is "100°C", the value of current flowing through the catalyst 11 is "6 mA", the amount of the catalyst 11 is "100 mg", the flow rate of ammonia is "50 mL/min", and the reaction pressure is "atmospheric pressure". In this case, the actual values of the material of the catalyst 11 when the material is "1 wt% Ru/CeO₂," "3 wt% Ru/CeO₂," "5 wt% Ru/CeO₂," and" 7 wt% Ru/CeO₂" are illustrated in Fig. 10.

As is clear from Fig. 10, also when the temperature of the catalyst 11 is as low as " 100°C", there is a tendency that the ammonia decomposition rate increases as the support amount of the active metal of the catalyst 11 increases.

### [5] Mechanisms

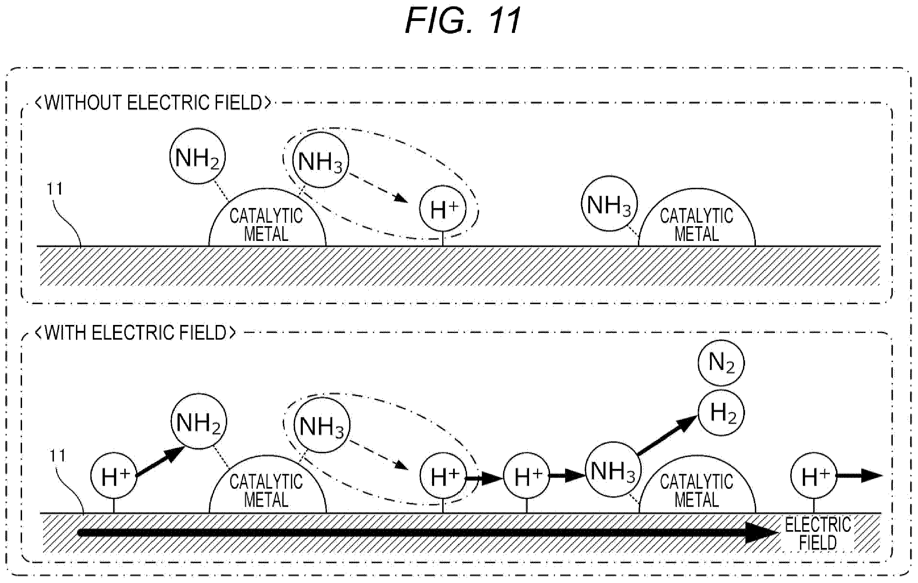

Next, mechanisms for accelerating decomposition of ammonia in the ammonia decomposition system 10 according to the embodiment are described with reference to Fig. 11. Fig. 11 schematically illustrates a state where ammonia is decomposed in the catalyst 11. Also, Fig. 11 illustrates the case of "without electric field" where no electric field is applied to the catalyst 11, as a comparative example, in the upper part, and the case of "with electric field" where an electric field is applied to the catalyst 11 in the lower part.

Firstly, in the comparative example where no electric field is applied to the catalyst 11, an ion (H⁺) or atom (H) of, for example, hydrogen may be extracted from ammonia (NH₃) adsorbed on the catalytic metal (active metal). However, the ion remains on the surface of the oxide as the catalyst support and does not move actively.

On the other hand, when an electric field is applied to the catalyst 11 as in the embodiment, an ion (H⁺) of, for example, hydrogen is pulled by the electric field and moves on the surface of the oxide as the catalyst support. More specifically, two mechanisms are conceivable as the ion movement mechanism: the "Vehicle Mechanism" where a charged ion itself moves; and the "Grotthuss Mechanism" where an ion appears to move by, for example, hopping of a proton (Proton Hopping) via water adsorbed on the surface of the catalyst 11. In particular, proton hopping means a repeated phenomenon where when a proton (H⁺) that is a positively charged hydrogen atom binds to a water molecule, the bond between an oxygen atom that is inherently present and the hydrogen atom is broken, and the proton is passed to an adjacent water molecule. Consequently, protons exhibit behavior that they apparently move quickly on the surface of the catalyst 11 as if to form a bucket brigade. In any of the movement mechanisms, it is presumed that physical collision of actively moving ions with molecules of, for example, ammonia accelerates the decomposition of ammonia (NH₃) into hydrogen and nitrogen. As a result, decomposition of ammonia in the catalyst 11 is also accelerated particularly under an environment where the temperature of the catalyst 11 is low, as compared to the case where no electric field is applied to the catalyst 11.

However, the decomposition acceleration mechanisms described herein are merely theories, and are not intended to limit, for example, the configuration of the ammonia decomposition system 10.

### [6] Modifications

Modifications of the first embodiment are listed below. The modifications described below can be applied in combination as appropriate.

The ammonia decomposition system 10 in the present invention includes a computer system as the controller 2. The computer system mainly includes one or more processors and one or more memories, as hardware. The processor executes a program recorded in the memory of the computer system to realize a function as the controller 2 in the present invention. The program may be recorded in advance in the memory of the computer system, may be provided through a telecommunication line, or may be provided by being recorded in a non-transitory computer system-readable recording medium such as a memory card, an optical disk, or a hard disk drive. Moreover, a part or all of the functional units included in the controller 2 may be configured as an electronic circuit.

Moreover, the ammonia decomposition system 10 is not necessarily configured in such a manner that at least a part of the functions of the ammonia decomposition system 10 converge into one housing. The components of the ammonia decomposition system 10 may be provided, distributed over a plurality of housings. Conversely, in the first embodiment, the functions distributed over a plurality of devices may converge into one housing.

Furthermore, at least a part of the internal combustion engine system 100 is not limited to being mounted in the hull, and may be provided separately from the hull. As an example, when the controller 2 of the ammonia decomposition system 10 is embodied by a server device provided separately from the hull, the internal combustion engine system 100 can be controlled by the controller 2 by communication between the server device and (a communication device of) the hull. At least a part of the functions of the controller 2 may be realized by, for example, a cloud (cloud computing).

Moreover, the vessel where the internal combustion engine system 100 is mounted is not limited to a vessel that navigates a relatively long distance by refueling once as in an ocean-going vessel. The vessel may be, for example, a "pleasure boat" that is a boat used for sports, recreation, or the like in the sea. Furthermore, the vessels where the internal combustion engine system 100 is mounted may be, for example, merchant ships including cargo ships and cargo-passenger ships, work boats including tugboats and salvage boats, special vessels including meteorological observation vessels and training ships, and fishing boats, and warships. Moreover, the vessel is not limited to a manned type where an operator boards, and may be an unmanned type vessel that can be remotely controlled by a person (operator) or can be autonomously operated. Moreover, the vessel may include one or more power sources such as a motor (electric motor) in addition to the engine 101, in the hull. The internal combustion engine system 100 may be used for, for example, a work machine, a vehicle, and a projectile other than a vessel.

Moreover, the ammonia decomposition system 10 may be used for other than the internal combustion engine system 100. In other words, the ammonia decomposition system 10 is not necessarily configured in such a manner as to use the gas (hydrogen) obtained in the ammonia decomposition system 10 as the fuel for the engine 101. The gas (hydrogen or nitrogen) obtained by decomposing ammonia in the ammonia decomposition system 10 may be used for other than the engine 101. In this case, a tank (such as the hydrogen tank 102) that stores the gas obtained by decomposing ammonia in the ammonia decomposition system 10 may be provided, or may be omitted. Alternatively, the ammonia decomposition system 10 may be used for the purpose of decomposing ammonia. In this case, the gas (hydrogen or nitrogen) obtained by decomposing ammonia may be exhausted.

Moreover, it is simply required that an electric field be applied to the catalyst 11. The decomposition unit 1 does not necessarily include the pair of electrodes 12 and 13. For example, the decomposition unit 1 may include only the single electrode 12. Furthermore, neither do the components of the ammonia decomposition system 10 necessarily include the power supply device 3. A voltage may be applied to the catalyst 11 (across the pair of electrodes 12 and 13) from a power supply device outside the ammonia decomposition system 10.

Moreover, the ammonia decomposition system 10 does not necessarily include the controller 2 that controls the decomposition rate of ammonia in the decomposition unit 1, and the controller 2 may be omitted. Moreover, the ammonia decomposition system 10 does not necessarily include the decomposition unit 1 having the catalyst 11 and the electrodes 12 and 13. Neither is the ammonia decomposition system 10 necessarily configured in such a manner that the controller 2 changes the decomposition rate by changing at least one of the temperature of the catalyst 11, the value of current flowing through the catalyst 11, or the flow rate of ammonia passing through the catalyst 11. Neither is the ammonia decomposition system 10 necessarily configured in such a manner that the controller 2 changes the decomposition rate according to at least the current value in such a manner that as the current value increases, the decomposition rate increases.

Moreover, the ammonia decomposition system 10 does not necessarily include the heating unit 4 that heats the catalyst, and the heating unit 4 may be omitted. Neither is the ammonia decomposition system 10 necessarily configured in such a manner that the active metal of the catalyst 11 is any of Ru, Ni, Fe, or Co, and that the oxide of the catalyst 11 includes any of Ce, Zr, Ba, or Sr. Neither is it necessarily configured in such a manner that the oxide is any of CeO₂, CeₓZr₍₁₋ₓ₎O₂, BaZrO₃, or SrₓBa₍₁₋ₓ₎ZrO₃.

Moreover, the internal combustion engine system 100 is not necessarily configured in such a manner as to heat the decomposition unit 1 by use of the exhaust heat of the engine 101. Neither is the internal combustion engine system 100 necessarily configured in such a manner that the engine 101 uses the hydrogen obtained in the decomposition unit 1 as at least a part of the fuel. Neither is it necessarily configured in such a manner that the ammonia as the fuel for the engine 101 and the ammonia to be decomposed in the decomposition unit 1 are housed in the common tank, and the ammonia may be housed in separate tanks.

### (Second Embodiment)

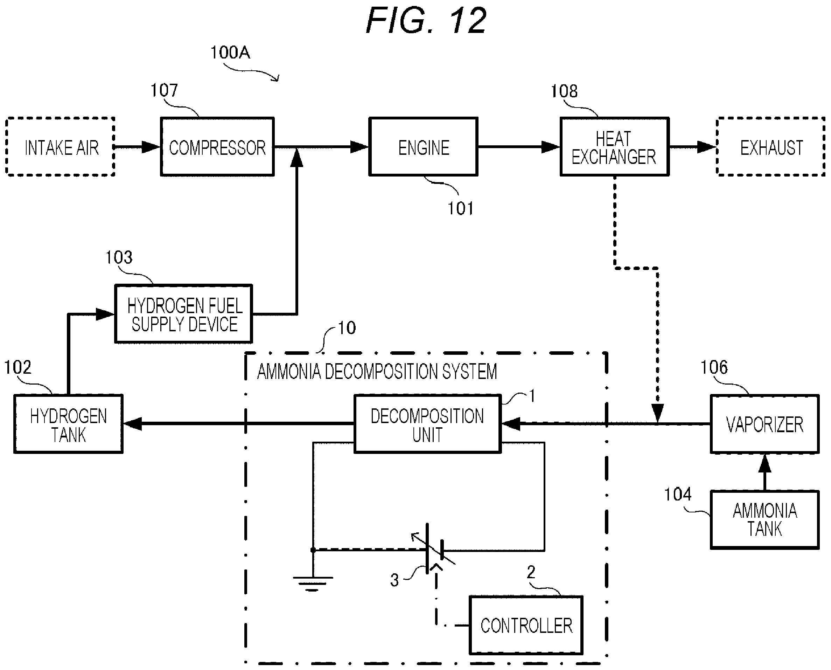

As illustrated in Fig. 12, an internal combustion engine system 100A according to the embodiment is different from the internal combustion engine system 100 according to the first embodiment in that ammonia is not used as the fuel for the engine 101 but only hydrogen is used as the fuel for the engine 101. Hereafter, the common reference numerals are assigned to configurations similar to those of the first embodiment, and the descriptions thereof are omitted as appropriate.

In other words, in the embodiment, the ammonia fuel supply device 105 (refer to Fig. 1) for supplying ammonia to the engine 101 is omitted, and only hydrogen is supplied as the fuel to the engine 101. Hence, in the embodiment, the engine 101 is a hydrogen fueled internal combustion engine (Hydrogen fueled internal combustion engine) that generates power by use of the hydrogen supplied from the hydrogen fuel supply device 103 as the fuel. According to the engine 101, as compared to a case where a mixed gas of ammonia and hydrogen is used as a fuel, generation of unburned ammonia or greenhouse gases can be restrained, and a cleaner exhaust gas can be realized.

Also in the internal combustion engine system 100A according to the embodiment, the hydrogen used as the fuel is obtained by decomposing ammonia in the ammonia decomposition system 10. Therefore, also in the embodiment, the fuel can be produced from the (liquefied) ammonia stored in the ammonia tank 104 as in the first embodiment; therefore, the hydrogen as the fuel for the engine 101 can be supplied efficiently and safely.

As a modification of the second embodiment, the engine of the internal combustion engine system 100A may be what is called a dual fuel engine (DF engine). The foregoing type of engine can support both of a premixed combustion method in which gaseous fuel (hydrogen) is mixed with air and then forced to flow into a combustion chamber of the engine 101, and a diffusion combustion method in which a liquid fuel is injected into the combustion chamber of the engine 101 and combusted therein. As an example, the liquid fuel is assumed to be a fossil fuel (such as light oil and gasoline), a biofuel, or a synthetic fuel. More specifically, with the use of, for example, light oil as the liquid fuel, the internal combustion engine system 100 can support both of a gas mode using hydrogen as a fuel and a diesel mode using, for example, light oil as a fuel. In the gas mode, a small amount of liquid fuel (such as light oil) may be further used as an ignition fuel.

The configurations according to the second embodiment (including the modification) can be employed in combination with various configurations described in the first embodiment (including the modifications) as appropriate.

### [Supplemental Notes of the Invention]

An outline of the invention extracted from the above-mentioned embodiments is supplementarily described below. Note that configurations and processing functions, which are described in the following supplementary notes, can be selected and freely combined.

### <Supplementary Note 1>

An ammonia decomposition system including:
a decomposition unit that decomposes ammonia; and
a controller that controls a decomposition rate of ammonia in the decomposition unit.

### <Supplementary Note 2>

The ammonia decomposition system according to supplementary note 1, in which the decomposition unit includes:
a catalyst that decomposes ammonia; and
an electrode that applies an electric field to the catalyst.

### <Supplementary Note 3>

The ammonia decomposition system according to supplementary note 2, in which the controller changes the decomposition rate by changing at least one of a temperature of the catalyst, a value of current flowing through the catalyst, or a flow rate of ammonia passing through the catalyst.

### <Supplementary Note 4>

The ammonia decomposition system according to supplementary note 3, in which the controller changes the decomposition rate according to at least the current value in such a manner that as the current value increases, the decomposition rate increases.

### <Supplementary Note 5>

The ammonia decomposition system according to any of supplementary notes 2 to 4,
further including a heating unit that heats the catalyst,
in which the heating unit brings the temperature of the catalyst within a range from 50°C or higher to 600°C or lower.

### <Supplementary Note 6>

The ammonia decomposition system according to any of supplementary notes 2 to 5, in which
the catalyst has an active metal and an oxide,
the active metal is any of Ru, Ni, Fe, or Co, and
the oxide has any of Ce, Zr, Ba, or Sr.

### <Supplementary Note 7>

The ammonia decomposition system according to supplementary note 6,
in which the oxide is any of CeO₂, CeₓZr₍₁₋ₓ₎O₂, BaZrO₃, or SrₓBa₍₁₋ₓ₎ZrO₃.

### <Supplementary Note 8>

An internal combustion engine system including:
the ammonia decomposition system according to any of supplementary notes 1to 7; and
an engine that is driven by receiving supply of gas outputted from the ammonia decomposition system.

### <Supplementary Note 9>

The internal combustion engine system according to supplementary note 8,
in which the decomposition unit is heated by use of exhaust heat of the engine.

### <Supplementary Note 10>

The internal combustion engine system according to supplementary note 8 or 9,
in which the engine uses hydrogen obtained in the decomposition unit, as at least a part of a fuel.

### <Supplementary Note 11>

The internal combustion engine system according to supplementary note 10,
in which the engine uses the hydrogen obtained in the decomposition unit, and ammonia, as the fuel.

### <Supplementary Note 12>

The internal combustion engine system according to supplementary note 11,
in which the ammonia as the fuel for the engine is housed in a tank common with the ammonia to be decomposed in the decomposition unit.

### LIST OF REFERENCE SIGNS

- 1: Decomposition unit
- 2: controller
- 4: Heating unit
- 10: Ammonia decomposition system
- 11: Catalyst
- 12, 13: Electrode
- 100, 100A: Internal combustion engine system
- 101: Engine
- 104: Ammonia tank (tank)

## Claims

1. An ammonia decomposition system comprising:
a decomposition unit that decomposes ammonia; and
a controller that controls a decomposition rate of ammonia in the decomposition unit.

2. The ammonia decomposition system according to claim 1, wherein the decomposition unit includes:
a catalyst that decomposes ammonia; and
an electrode that applies an electric field to the catalyst.

3. The ammonia decomposition system according to claim 2, wherein the controller changes the decomposition rate by changing at least one of a temperature of the catalyst, a value of current flowing through the catalyst, or a flow rate of ammonia passing through the catalyst.

4. The ammonia decomposition system according to claim 3, wherein the controller changes the decomposition rate according to at least the current value in such a manner that as the current value increases, the decomposition rate increases.

5. The ammonia decomposition system according to claim 2 or 3, further comprising a heating unit that heats the catalyst, wherein the heating unit brings the temperature of the catalyst within a range from 50°C or higher to 600°C or lower.

6. The ammonia decomposition system according to claim 2 or 3, wherein
the catalyst includes an active metal and an oxide,
the active metal is any of Ru, Ni, Fe, or Co, and
the oxide includes any of Ce, Zr, Ba, or Sr.

7. The ammonia decomposition system according to claim 6, wherein the oxide is any of CeO₂, CeₓZr₍₁₋ₓ₎O₂, BaZrO₃, or SrₓBa₍₁₋ₓ₎ZrO₃.

8. An internal combustion engine system comprising:
the ammonia decomposition system according to claim 1; and
an engine that is driven by receiving supply of gas outputted from the ammonia decomposition system.

9. The internal combustion engine system according to claim 8, wherein the decomposition unit is heated by use of exhaust heat of the engine.

10. The internal combustion engine system according to claim 8 or 9, wherein the engine uses hydrogen obtained in the decomposition unit, as at least a part of a fuel.

11. The internal combustion engine system according to claim 10, wherein the engine uses the hydrogen obtained in the decomposition unit, and ammonia, as the fuel.

12. The internal combustion engine system according to claim 11, wherein the ammonia as the fuel for the engine is housed in a tank common with the ammonia to be decomposed in the decomposition unit.

13. An ammonia decomposition method comprising:
decomposing ammonia in a decomposition unit; and
controlling a decomposition rate of ammonia in the decomposition unit.
